# FASCICULE DE BREVET EUROPEEN

(11) **EP 0 340 134 B1**
(45) Date de publication et mention de la délivrance du brevet: **30.06.1993**
(21) Numéro de dépôt: 89460011.3
(22) Date de dépôt: 12.04.1989
(51) Int. Cl.: H02K 7/06, B25J 15/02, B25J 19/06

(54) **Pince électrique à maintien magnétique**
Elektrische Zange mit magnetischer Halterung
Magnetically held electric tongs

(30) Priorité: 26.04.1988 FR 8805730
(43) Date de publication de la demande: 02.11.1989
(73) Titulaire: Roudaut, Philippe Robert Louis, F-95120 Ermont (FR)
(72) Inventeur: Roudaut, Philippe Robert Louis, F-95120 Ermont (FR)
(74) Mandataire: Le Guen, Louis François

(56) Documents cités:
- DE-A- 2 851 961
- FR-A- 2 581 914
- GB-A- 972 415

## Description

La présente invention concerne une pince électrique à maintien magnétique et, plus particulièrement, une pince utilisable dans le domaine de l'automation pour effectuer des opérations telles que la préhension de pièces à déplacer. Dans la suite, on désignera par pince l'ensemble de la tête de préhension, avec ses doigts, et un organe de commande des doigts de la tête de préhension.

En pratique, les robots manipulateurs sont prévus pour déplacer des pièces, une à la fois, la masse de la pièce et celle de la pince ne devant pas dépasser une valeur maximale prédéterminée. En conséquence, les pinces doivent avoir une masse aussi réduite que possible afin de disposer d'une plus grande marge de manoeuvre en ce qui concerne les pièces à déplacer.

Les pinces pneumatiques répondent à cette exigence. En effet, leurs moyens de commande se résument à un boîtier et un vérin dont le cylindre est pratiquement vide. Par contre, dans les pinces électriques, l'organe de commande comprend, en plus du boîtier, le moteur électrique qui est relativement lourd pour deux raisons. Il doit être rapide dans la phase d'approche des mors et il doit pouvoir faire exercer par les mors une force de maintien d'autant plus grande que la pièce à déplacer est plus lourde. Ces deux conditions, rapidité et force, sont satisfaites en choisissant un moteur électrique de puissance suffisante. Dans les ateliers, on utilise, de préférence, des moteurs électriques à courant continu fonctionnant sous basse tension, par exemple 24 V, cette tension servant généralement à alimenter les automates. Or la masse d'un moteur électrique à courant continu, ainsi alimenté, augmente plus vite que sa puissance.

Dans le document FR-2 581 914, on a proposé d'utiliser deux moteurs électriques indépendants, l'un assurant le réglage d'ouverture et le péserrage, et l'autre le serrage. Cet arrangement conduit à une structure compliquée et relativement lourde. Le document DE-A-2 851 961 concerne une tête de préhension pour robot munie d'un moteur électrique.

Dans ce dernier document, sont mentionnés les inconvénients des vérins hydrauliques et pneuamatiques, qui nécessitent l'utilisation de dispositifs d'étanchéité compliqués et qui sont bruyants.

Un objet de l'invention consiste à prévoir une pince électrique plus légère que les pinces électiques connues, et ayant une structure relativement simple.

Le document GB-A-972 415 décrit un dispositif à moteur électrique comportant des moyens de maintien magnétique, dont la structure mécanique est compliquée.

Un autre objet de l'invention consiste à prévoir une pince électrique à maintien magnétique comportant une tête de préhension et un organe de commande, dont la structure mécanique soit relativement simple.

On atteint cet objet par les moyens définis dans la partie caractérisante de la revendication 1. D'autres objets sont atteints par les moyens décrits dans les revendications dépendantes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en coupe longitudinale d'une pince suivant l'invention, les doigts de la pince étant en position fermée,
la Fig. 2 est une vue en coupe longitudinale de la pince de la Fig. 1, les doigts de la pince étant en position ouverte,
la Fig. 3 est une vue de côté de la pince de la Fig. 1,
la Fig. 4 est une vue partielle en coupe longitudinale illustrant le fonctionnement de la butée d'ouverture de la tête de préhension,
la Fig 5 est une vue en coupe transversale suivant la ligne V-V de la Fig. 1,
la Fig 6 est une vue en perspective montrant une forme de réalisation pratique d'une paire d'aimants permanents utilisable dans l'organe de commande de la pince de a Fig. 1, et
les Figs 7 et 8 sont des vues schématiques illustrant le fonctionnement du système d'aimants permanents de l'organe de commande de la pince de la Fig. 1.

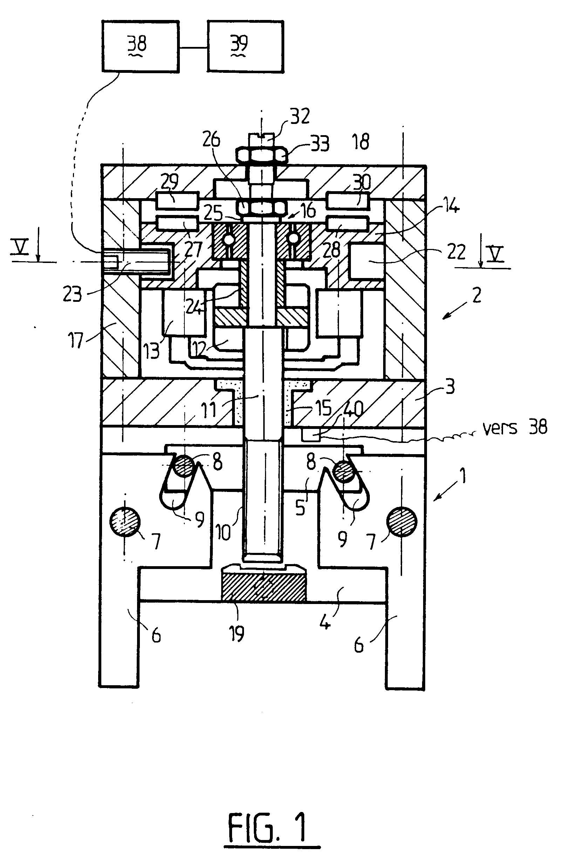

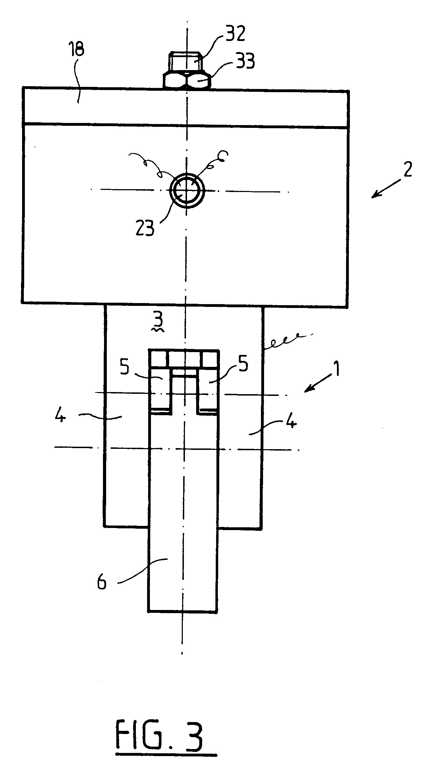

Dans la pince des Figs. 1 à 3, on peut distinguer la tête de préhension 1 et l'organe de commande 2. La tête de préhension 1 est du type de celle qui est décrite dans la demande de brevet français FR-A-2 592 827 intitulée "Pince pneumatique". Elle comprend une base 3, prolongée par deux ailes longitudinales parallèles 4, une pièce 5 mobile en translation longitudinale et deux doigts ou mors 6 qui peuvent respectivement tourner autour de deux axes transversaux 7 dont les bouts sont respectivement portés par les deux ailes 4. La pièce mobile 5 porte deux barreaux 8 qui sont respectivement engagés dans des encoches 9 des doigts 6. La base 3 de la tête de préhension 1 est, avec ses ailes 4, rendue solidaire du corps de l'organe de commande, par exemple par des vis.

La pièce 5 a une forme externe parallélépipèdique et ne peut tourner entre les ailes 4. Elle comporte, comme un écrou, un trou axial taraudé dans lequel se visse une partie filetée 10 d'un axe longitudinal 11, lequel passe à travers la base 3 de la tête 1 pour entrer dans l'organe de commande 2. Ainsi, la pièce 5 se comporte comme un écrou à rotation bloquée sur la vis 10. Quand on fait tourner la vis 10 de l'axe 11 dans un sens ou dans l'autre, l'écrou 5 s'éloigne plus ou moins de la base 3, si bien que les barreaux 8 pénètrent plus ou moins dans les encoches 9 des doigts 6 qui s'écartent plus ou moins.

Dans l'organe de commande 2, l'axe 11 est entraîné en rotation par le rotor 12 d'un moteur à courant continu dont le stator 13 est solidaire d'un disque 14 pouvant tourner autour de l'axe 11. Ce moteur à courant continu est, par exemple, du type moteur couplé à courant continu faisant partie de la gamme "SMOP" commercialisée par la Société française PRECILEC S.A.

En pratique, l'axe 11 tourillonne dans un palier lisse 15 logé dans la base 3 de la tête de préhension 1 et dans la bague interne d'un roulement à billes 16. La cage externe du roulement 16 est solidaire du disque 14. Le corps de l'organe de commande 2 comprend une paroi latérale cylindrique 17 dont le diamètre interne permet la rotation du disque 14. Une extrémité frontale de la paroi 17 est, comme on l'a déjà mentionné, reliée par des vis à la face externe de la base 3 de la tête tandis que son autre extrémité frontale est fermée par un fond circulaire 18. Le palier lisse 15 laisse l'axe 11 libre de se déplacer longitudinalement. Par contre, l'axe est solidaire de la bague interne du roulement 16.

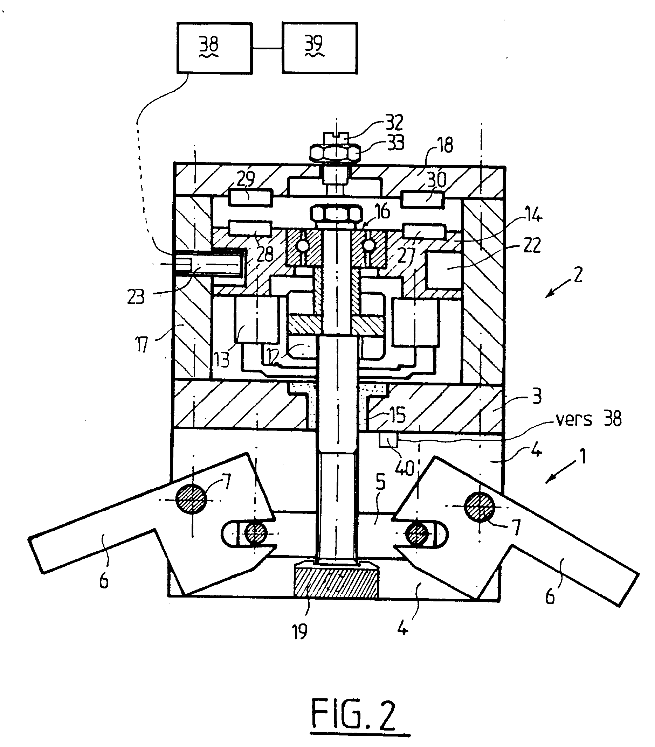

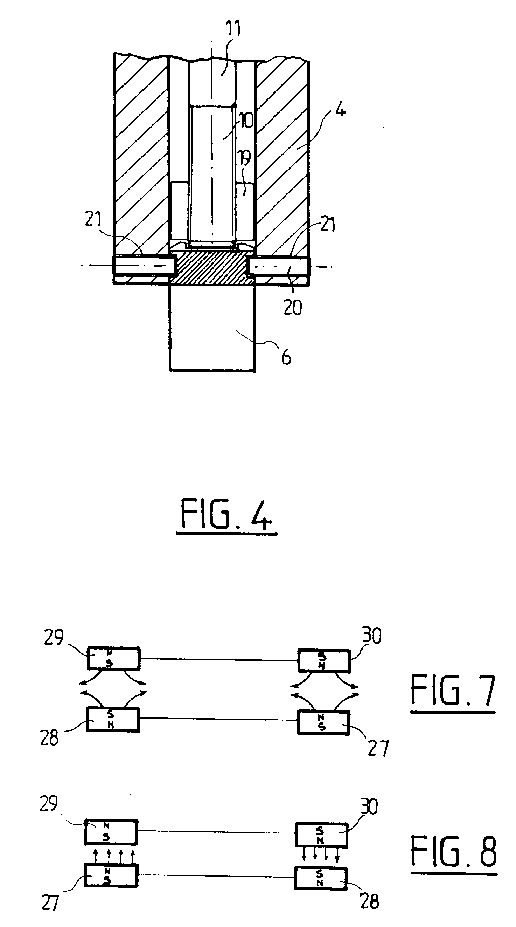

En dehors de l'organe de commande 2, au-delà de la partie filetée 10 de l'axe 11, il est prévu une butée axiale 19 qui est bloquée en rotation par les ailes 4. La butée 19 est bloquée longitudinalement par des goupilles 20, Fig. 4, qui sont fixées dans des trous 21 percés dans les ailes 4. A la Fig. 4, on n'a montré que deux goupilles 20 diamétralement opposées, mais pour éviter la rotation possible de la butée axiale autour de ces goupilles, on peut prévoir une ou plusieurs autres goupilles obliques ou tout autre moyen équivalent. Comme on le verra dans la suite, le bout de l'axe 11, à la saisie d'un objet, s'écarte de la butée axiale 19, comme le montre la Fig. 2. Dans ce cas, on peut aussi prévoir un guidage axial de l'axe 11.

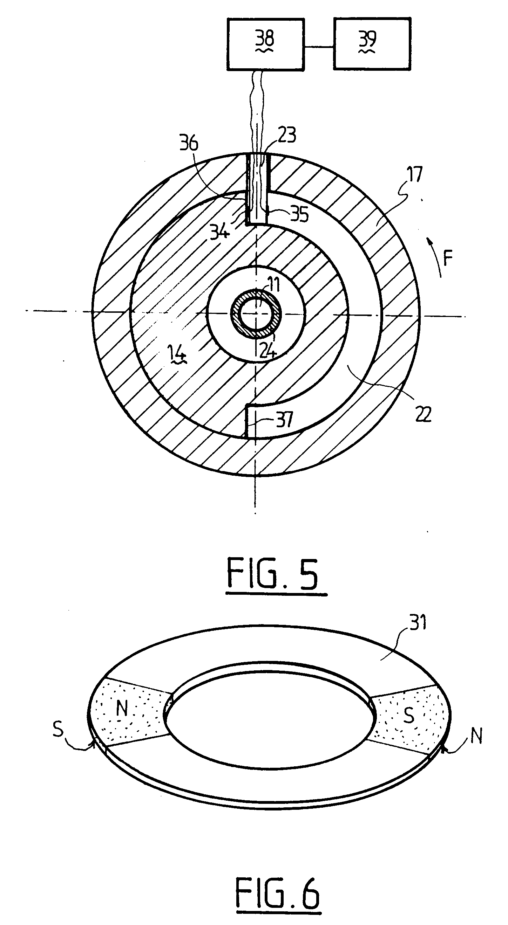

Le disque 14 présente, sur sa face latérale externe, une gorge semi-circulaire 22, qui est notamment visible sur les Figs. 1 et 5. Dans un trou radial percé dans la paroi cylindrique 17 et situé en face de la gorge 22, est montée une goupille butée 23 qui limite la rotation du disque 14 à un demi-tour dans un sens ou dans l'autre, comme le montre la Fig. 5. La hauteur de la gorge 22 est légèrement supérieure à l'épaisseur de la goupille butée 23.

Comme le montre la Fig. 1, l'axe 11 présente encore, dans l'organe de commande 2, un épaulement contre lequel le rotor 12, enfilé sur l'axe, est bloqué par l'intermédiaire d'une douille 24, servant d'entretoise entre le rotor 12 et la bague interne du roulement 16, de cette bague interne, d'une rondelle 25 et d'un écrou 26 vissé sur l'extrémité correspondante de l'axe 11.

Sur sa face qui se trouve de l'autre côté du stator 13, le disque 14 porte un paire d'aimants permanents plats 27 et 28 dont les positions sont diamétralement opposées et correspondent respectivement aux limites de la gorge semi-circulaire 22. Le pôle Nord de l'aimant 27 est tourné vers le fond 18 et son pôle Sud vers le disque 14. Le pôle Sud de l'aimant 28 est tourné vers le fond 18 et son pôle Nord vers le disque 14. Le matériau du disque 14 est tel que celui-ci joue aussi le rôle d'un écran magnétique entre les aimants 27 et 28, d'une part, et les aimants permanents du moteur électrique, d'autre part.

Le fond 18 porte également une paire d'aimants permanents plats 29 et 30 dont les positions sont également diamétralement opposées. A la Fig. 1, qui correspond à la position de fermeture des doigts de la pince, l'aimant 29 est en face de l'aimant 27 et l'aimant 30 en face de l'aimant 28. Le pôle Sud de l'aimant 29 est tourné vers le disque 14 et son pôle Nord vers le fond 18. Le pôle Nord de l'aimant 30 est tourné vers le disque 14 et son pôle Sud vers le fond 18. En pratique, les aimants 27 et 28, d'une part, et 29 et 30, d'autre part, peuvent respectivement faire partie d'un anneau magnétique 31, tel que celui qui est montré à la Fig. 6.

Au centre du fond 18, est prévu un trou taraudé axial dans lequel se visse une vis 32, qui passe à travers le fond 18. Un contre-écrou 33 se visse autour de la partie externe de la vis 32 pour la bloquer. En pratique, la vis 32 sert de butée contre un mouvement axial ascentionnel trop important de l'axe 11, l'écrou 26 venant buter contre le bout de la vis 32, comme le montre la Fig. 1.

Des deux côtés de la goupille butée 23, à l'intérieur de la gorge 22, sont prévus des détecteurs de proximité 34 et 35 qui sont respectivement actionnés quand l'extrémité 36 ou l'extrémité 37 de la gorge 22 viennent en contact avec le côté correspondant de la goupille butée 23. Les détecteurs 34 et 35 sont respectivement reliés par des fils électriques à un circuit de commande 38 qui commande la source d'alimentation 39 du moteur électrique 12-13. On n'a représenté les fils électriques reliant la source 39 au moteur électrique.

Un autre détecteur de proximité 40 est monté entre la base 3 de la tête de préhension 1 et la pièce mobile 5. Le détecteur 40 est également relié au circuit de commande 38.

Les détecteurs de proximité 34, 35 et 40 peuvent être des contacts de proximité classiques ou être constitués de petits aimants logés dans une des surfaces, qui viennent en contact, tadis que l'autre surface porte un contact scellé. De préférence, sur les fils de liaison des détecteurs, sont montés des diodes électroluminescentes ou LED, qui sont fixées sur des surfaces visibles de la pince.

On va maintenant décrire le fonctionnement de la pince de l'invention, en supposant que la position initiale est celle de la Fig. 2, avec les doigts ouverts. Les paires d'aimants 27-28 et 29-30 sont alors dans la position montrée à la Fig. 7, c'est-à-dire que les deux paires se repoussent. Le disque 14 est écarté du fond 18 et le roulement 16 a entraîné l'axe 11 vers le bas, en regardant la Fig. 2.

Pour commander la préhension d'un objet, le circuit de commande 38 commute la source d'alimentation 39 à l'état d'alimentation du moteur 12-13 de manière que l'axe 11 tourne dans le sens où la partie filetée 10 se visse dans la pièce 5. La pièce 5 se rapproche de la base 3 en refermant les doigts 6 dont les encoches 9 sont entraînées par les barreaux 8. Quand les doigts 6 viennent en contact avec l'objet à transporter, la réaction exercée par la surface de l'objet provoque l'arrêt du mouvement de la pièce 5, donc de la rotation de l'axe 11 et du rotor 12. Le rotor ne pouvant plus tourner, c'est le stator 13 qui tourne, mais dans le sens contraire de celui qu'avait précédemment le rotor. La rotation du stator 13, solidaire du disque 14, dans le sens indiqué par la flèche F, Fig. 5, est limitée à un demi-tour par la butée radiale 23 logée dans la gorge 22. Le disque 14 tournant avec le stator 13, la paire d'aimants 27-28 prend la position montrée aux Figs. 1 et 8. Les paires d'aimants s'attirent, ce qui soulève le disque 14, le roulement 16, l'axe 11 et la pièce 5. La montée de la pièce 5 tire sur les barreaux 8 qui tendent à mieux fermer les doigts 6. Le mouvement vers le haut, en regardant la Fig. 1, est limité par la souplesse du contact entre les doigts et l'objet saisi, et éventuellement par la pointe de la vis 32 sur laquelle vient buter le bout supérieur de l'axe 11.

Par ailleurs, dès que le disque 14 a tourné avec le stator 13, le détecteur de proximité 35 envoie un signal au circuit de commande 38 qui commute la source 39 pour couper l'alimentation du moteur électrique.

Pour réouvrir la pince, le circuit de commande 38 commute la source 39 qui alimente le moteur 12-13 de manière à faire tourner l'axe 11 dans le sens de la flèche F, Fig. 5. La pièce 5 s'éloigne alors de la base 3 en écartant les doigts 6. Quand la pièce 5 arrive au bout de la partie filetée 10, soit approximativement la position montrée à la Fig. 2, le rotor 12 s'arrête et le stator tourne dans le sens contraire de la flèche F, Fig. 5. La paire d'aimants 27-28 reprend la position montrée à la Fig. 2 et est repoussée par la paire d'aimants 29-30. Le disque 14, le roulement 16, l'axe 11 et la pièce 5 descendent. Par ailleurs, le disque 14 ayant tourné d'un demi-tour, le détecteur de contact 35 envoie un signal au circuit de commande 38 qui commute la source 39 pour couper l'aimentation du moteur électrique.

Le circuit de commande 38 est capable d'interpréter les signaux envoyés par les détecteurs 34 et 35 et en tenir compte uniquement à chaque changement de position angulaire. Entre deux changements de position angulaire, le circuit de commande ne tient pas compte des signaux ainsi reçus. De préférence, le circuit de commande fonctionne avec un microprocesseur qui a été programmé pour séquencer les opérations de fermeture et d'ouverture de la pince, ainsi éventuellement que d'autres fonctions telles que la rotation du bras portant la pince, etc.

Il apparaît qu'en position de fermeture, pratiquement tout l'effort de maintien de l'objet entre les doigts 6 est fourni par la force d'attraction des aimants 27 et 29, d'une part, et 28 et 30, d'autre part. Le moteur électrique 12-13 ne sert donc pratiquement qu'à déplacer les doigts 6, ce qui ne demande pas une puissance excessive, même à grande vitesse. Ainsi, le poids du moteur électrique peut rester dans des limites comparables avec celui des vérins pneumatiques. Par ailleurs, en cas de panne de courant continu, les aimants permanents conservent leur pouvoir d'attraction et l'objet saisi reste entre les doigts 6.

Au cours de la description, on a mentionné le jeu entre la butée 23 et les bords de la gorge, le fait que le palier 15 soit lisse et le fait que le bout de l'axe 11 puisse se soulever de la butée 19. Ces précautions sont prises afin de permettre les légers mouvements de montée et de descente de l'axe 11. Par ailleurs, la butée constituée par la vis 32 permet de conserver un entrefer raisonnable entre les paires d'aimants en attraction. Cette butée est nécessaire pour empêcher les aimants de se coller ou même de trop se rapprocher. Le fait que cette butée soit réglable par rotation de la vis 32 dans le trou du fond 18 permet de régler l'entrefer, c'est-à-dire l'effort demandé au stator pour faire tourner le disque 14 dans le sens contraire à celui de la flèche F, Fig. 5. Il faut noter que cet effort du stator est relativement limité car les aimants se déplacent dans leur plan par rapport aux aimants fixes. Il n'y a donc qu'un effort de cisaillement des flux.

Le détecteur de proximité 40 sert à constater la fermeture de la pince sans prise d'objet. Le circuit de commande peut alors interpréter cet état et faire, par exemple, décrire un nouveau cycle de préhension à la pince, ou encore déclencher une alarme, etc.

## Revendications

1. Pince électrique à maintien magnétique comportant une tête de préhension (1) et un organe de commande (2), caractérisée en ce que l'organe de commande (2) comprend un moteur électrique (12-13) à courant continu alimenté, à travers un circuit de commande (38), à partir d'une source d'alimentation (39) et un système commutable d'aimants permanents (27,28,29,30), le rotor (12) du moteur électrique étant solidaire d'un axe (11) capable par des moyens de transfert de mouvement de rotation (5,8,9) d'actionner la tête de préhension (1), ledit axe (11) étant monté dans le corps de l'organe de commande (2) déplaçable axialement entre deux positions, le stator (13) du moteur électrique étant monté libre de tourner entre deux positions angulaires limites et étant solidaire d'une première partie (27-28) du système commutable d'aimants permanents, laquelle est solidaire de moyens (16) de support de l'axe (11), la seconde partie (29-30) du système commutable d'aimants permanents étant solidaire du corps de l'organe de commande (2), les deux parties du système commutable d'aimants permanents s'attirant quand le stator (13) occupe sa première position angulaire et se repoussant quand le stator (13) occupe sa seconde position angulaire, à chaque position angulaire limite du stator (13) étant associé un détecteur (34,35) envoyant un signal au circuit de commande (38) quand le stator se trouve dans la position angulaire limite correspondante.

2. Pince suivant la revendication 1, caractérisée en ce que le stator (13) est solidaire de la première partie (28-29) du système commutable d'aimants permanents par l'intermédaire d'une pièce (14) libre en rotation qui est supportée par un palier (16) de l'axe (11).

3. Pince suivant la revendication (2), caractérisée en ce que ladite pièce libre en rotation est un anneau (14).

4. Pince suivant la revendication 2 ou 3, caractérisée en ce que ledit palier est un roulement à billes (16) dont la cage externe est solidaire de l'anneau (14) et la cage interne solidaire dudit axe (11).

5. Pince suivant l'une des revendications 1 à 4, caractérisée en ce que chaque partie du système commutable d'aimants permanents est formée d'une paire d'aimants permanents (27-28,29-30) à flux de direction axiale, l'un des aimants ayant son pôle Nord dans un sens et l'autre dans l'autre, les deux aimants d'une paire étant situés dans des positions diamétralement opposées, ainsi que les deux positions angulaires limites du stator (11).

6. Pince suivant l'une des revendications 1 à 5, caractérisée en ce qu'une butée réglable (32) limite l'entrefer minimal des deux parties du système commutable d'aimants permanents quand ils sont en position d'attraction.

7. Pince suivant l'une des revendications 1 à 6, caractérisée en ce qu'une butée axiale (19) solidaire du corps de l'organe de commande (2) est prévue pour limiter le déplacement dudit axe (11) quand les deux parties du système commutable d'aimants permanents sont dans la position où elles se repoussent.

## Patentansprüche

1. Elektrische Zange mit magnetischer Halterung mit einem Greifkopf (1) und einem Steuerorgan (2), **dadurch gekennzeichnet,** daß das Steuerorgan (2) einen elektrischen, von einer Speisequelle (39) über eine Steuerschaltung (38) gespeisten Gleichstrommotor (12 - 13) und ein Kommutiersystem mit umschaltbaren Permanentmagneten (27, 28, 29, 30) enthält, daß der Rotor (12) des elektrischen Motors mit einer Welle (11) verbunden ist, die über Übertragungsmittel (5, 8, 9) für eine Rotationsbewegung den Greifkopf (1) betätigen kann, daß die Welle (11) in dem Gehäuse des Steuerorgans (2) zwischen zwei Stellungen axial verschiebbar gelagert ist, daß der Stator (13) des Motors so montiert ist, daß er sich zwischen zwei begrenzten Winkelstellungen bewegen kann, und mit einem ersten Teil (27 - 28) des Kommutiersystems mit Permanentmagneten verbunden ist, das mit dem Lager (16) für die Welle (11) verbunden ist, daß der zweite Teil (29 - 30) des Kommutiersystems mit Permanentmagneten mit dem Gehäuse des Steuerorgans (2) verbunden ist, daß die beiden Teile des Kommutiersystems mit Permanentmagneten einander anziehen, wenn der Stator (13) seine erste Winkelstellung einnimmt, und einander abstoßen, wenn der Stator (13) seine zweite Winkelstellung einnimmt, daß jeder begrenzten Winkelstellung des Stators (13) ein Detektor (34, 35) zugeordnet ist, der ein Signal an die Steuerschaltung (38) liefert, wenn der Stator sich in der entsprechenden begrenzten Winkelstellung befindet.

2. Zange nach Anspruch 1, **dadurch gekennzeichnet,** daß der Stator (13) mit dem ersten Teil (28 - 29) des Kommutiersystems mit Permanentmagneten über ein frei rotierendes Teil (14) verbunden ist, das durch ein Lager (16) der Welle (11) getragen ist.

3. Zange nach Anspruch 2, **dadurch gekennzeichnet,** daß das frei rotierbare Teil ein Ring (14) ist.

4. Zange nach Anspruch 2 oder 3, **dadurch gekennzeichnet,** daß das Lager ein Kugellager (16) ist, dessen äußerer Käfig mit dem Ring (14) und dessen innerer Käfig mit der Welle (11) verbunden ist.

5. Zange nach einem der Ansprüche 1 - 4, **dadurch gekennzeichnet,** daß jeder Teil des Kommutiersystems mit Permanentmagneten durch ein Paar von axial polarisierten Permanentmagneten (27, 28, 29, 30) gebildet ist, daß die Nordpole der Magnete entgegengesetzt gerichtet sind, daß die beiden Magnete eines Paares einander diametral ebenso gegenüber liegen wie die beiden begrenzten Winkelstellungen des Stators (13).

6. Zange nach einem der Ansprüche 1 bis 5, **dadurch gekennzeichnet,** daß ein einstellbarer Anschlag (32) den minimalen Zwischenraum der beiden Teile des Kommutiersystems mit Permanentmagneten begrenzt, wenn sie sich in der Anziehstellung befinden.

7. Zange nach einem der Ansprüche 1 bis 6, **dadurch gekennzeichnet,** daß ein mit dem Gehäuse des Steuerorgans (2) verbundenes Axiallager (19) vorgesehen ist, um die Verschiebung der Welle (11) zu begrenzen, wenn die beiden Teile des Kommutiersystems mit Permanentmagneten sich in der Stellung befinden, in der sie einander abstoßen.

## Claims

1. Magnetically held electric tongs comprising a gripping head (1) and a control unit (2), characterised in that the control unit (2) comprises a direct current electric motor (12-13) supplied, through a control circuit (38), from a power supply (39) and a switchable system of permanent magnets (27, 28, 29, 30), the rotor (12) of the motor being joined to a shaft (11) capable, by means for transferring rotary movement (5, 8, 9), of actuating the gripping head (1), said shaft (11) being mounted in the casing of the control unit (2) axially movable between two positions, the stator (13) of the electric motor being mounted so that it can turn freely between two angular end positions and being joined to a first part (27-28) of the switchable system of permanent magnets, which is joined to means (16) for supporting shaft (11), the second part (29-30) of the switchable system of permanent magnets being joined to the casing of the control unit (2), the two parts of the switchable system of permanent magnets being attracted to each other when the stator (13) occupies its first angular position and repelling each other when the stator (13) occupies its second angular position, a sensor (34, 35) being connected to each angular end position of stator (13) and sending a signal to the control circuit (38) when the stator is in the corresponding angular end position.

2. Tongs according to claim 1, characterised in that stator (13) is joined to the first part (28-29) of the switchable system of permanent magnets by means of a freely rotatable member (14) which is supported by a bearing (16) on the shaft (11).

3. Tongs according to claim 2, characterised in that said freely rotatable member is a ring (14).

4. Tongs according to claim 2 or 3, characterised in that said bearing is a ball bearing (16) whose outer race is joined to ring (14) and the inner race is joined to said shaft (11).

5. Tongs according to any of claims 1 to 4, characterised in that each part of the switchable system of permanent magnets is constituted by a pair of permanent magnets (27-28, 29-30) with axially directed flux, one of the magnets having its north pole in one direction and the other in the other, the two magnets in a pair being located in diametrically opposite positions, as are the two angular end positions of the stator (11).

6. Tongs according to any of claims 1 to 5, characterised in that an adjustable stop (32) limits the minimum air gap between the two parts of the switchable system of permanent magnets when they are in attracting position.

7. Tongs according to any of claims 1 to 6, characterised in that an axial stop (19) joined to the casing of the control unit (2) is provided for limiting the movement of said shaft (11) when the two parts of the switchable system of permanent magnets are in the repelling position.
